# EUROPÄISCHE PATENTANMELDUNG

(11) **EP 1 030 425 A2**
(43) Veröffentlichungstag der Anmeldung: **23.08.2000**
(21) Anmeldenummer: 00102643.4
(22) Anmeldetag: 08.02.2000
(51) Int. Cl.: H02G 3/08, H01R 4/70

(54) **Dichtelement**

(30) Priorität: 19.02.1999 DE 19907204
(71) Anmelder: Delphi Technologies, Inc., Troy, MI 48007 (US)
(72) Erfinder: Cvasa, Eduard, 42289 Wuppertal (DE)
(74) Vertreter: Manitz, Finsterwald & Partner

(57) **Zusammenfassung**

Die Erfindung betrifft ein Dichtelement (10) zum Schutz einer Leitungsverbindung gegen Feuchtigkeit, Schmutz u. dgl., das zwei Öffnungen (12, 14) zur Durchführung von Leitungen aufweist. Zumindest eine der Öffnungen (12, 14) ist mit einem selbstschließenden Dichtabschnitt (16) versehen.

## Beschreibung

Die Erfindung betrifft ein Dichtelement zum Schutz einer Leitungsverbindung gegen Feuchtigkeit, Schmutz u. dgl., wobei das Dichtelement zwei Öffnungen zur Durchführung zumindest einer Leitung aufweist.

Solche Dichtelemente sind bekannt. Sie dienen dazu, Leitungsverbindungen gegen Feuchtigkeit, Schmutz u. dgl. zu schützen. Bekannte Dichtelemente bestehen aus einem im wesentlichen langgestreckten Körper mit zwei Öffnungen, durch die eine Leitung geführt wird, wobei als Dichtabschnitt Dichtlippen vorgesehen sind.

Es ist die Aufgabe der vorliegenden Erfindung, ein Dichtelement der eingangs genannten Art so auszugestalten, daß es mit und ohne eingeführter Leitungsverbindung gegen das Eindringen von Schmutz und Feuchtigkeit abdichtet.

Diese Aufgabe wird durch die Merkmale des Anspruchs 1 gelöst.

Eine solche Ausgestaltung besitzt den Vorteil, daß eine zweistufige Abdichtung gewährleistet ist, mit der einerseits mit eingeführter Leitung eine Dichtwirkung erzielt wird, die jedoch auch ohne Leitung bzw. bei wieder entfernter Leitung abdichtet. Da der zusätzliche Dichtabschnitt reversibel selbstschließend ausgebildet ist, kann auch nach einem Entfernen der Leitung, beispielsweise bei einer irrtümlichen oder falschen Belegung, das Dichtelement weiter verwendet werden, da sich die zugehörige Öffnung durch den selbstschließenden Dichtabschnitt reversibel wieder verschließt und somit das Eindringen von Feuchtigkeit, Schmutz u. dgl. in das Innere des Dichtelementes sicher verhindert. Es werden somit auch keine weiteren Einzelteile benötigt, mit denen die erzeugte Öffnung wieder verschlossen werden könnte.

Vorteilhafte Ausführungsformen der Erfindung sind in der Beschreibung, den Zeichnungen sowie den Unteransprüchen beschrieben.

Vorteilhafterweise sind die Öffnungen auf zwei gegenüberliegenden Seiten des Dichtelementes vorgesehen und vorzugsweise im wesentlichen koaxial zueinander angeordnet. Diese Ausgestaltung ermöglicht eine sichere und einfache Führung und Verbindung der Leitungen.

Gemäß einer bevorzugten Ausgestaltung ist das Dichtelement aus einem Gummimaterial oder dgl. hergestellt. Diese Materialien ermöglichen nicht nur eine kostengünstige Herstellung des Dichtelementes, sie gewährleisten auch in besonderem Maße die angestrebte Wirkung des reversibel selbstschließenden Dichtelementes.

Wenn nach einer Weiterbildung der zusätzliche Dichtabschnitt scheibenförmig ausgebildet ist und einen vorzugsweise radial verlaufenden Schlitz aufweist, ergibt sich sowohl eine gute und sichere Abdichtung wie auch eine einfache Durchführung der Leitung.

Damit die Abdichtung noch weiter verbessert wird, ist nach einer bevorzugten Ausgestaltung vorgesehen, daß der Schlitz von Abschnitten begrenzt ist, die dichtend aneinanderliegen. Hierbei ist es besonders vorteilhaft, wenn die dichtend aneinanderliegenden Abschnitte im Bereich ihrer gegenseitigen Anlage abgerundet sind, da hierdurch eine größere Flächenpressung und damit eine bessere Dichtwirkung erzielt werden kann.

Eine besonders einfache Herstellung wird ermöglicht, wenn sich der Schlitz im wesentlichen über den gesamten Innendurchmesser des angrenzenden Innenraumes erstreckt. Dies ermöglicht außerdem ein einfaches Einführen der Verbindungselemente.

Nach einer weiteren vorteilhaften Ausführungsform der Erfindung ist die Außenkontur des Dichtelementes quaderförmig und der zusätzliche Dichtabschnitt weist einen Schlitz auf, der unter etwa 45° zu den Seitenflächen des Quaders verläuft. Wird ein solches Dichtelement in ein entsprechend quaderförmiges Gehäuse eingesetzt, werden die Schlitze durch die elastischen Kräfte verschlossen, die als Gegenkräfte von den um 90° versetzten Gehäusewänden entstehen.

Weitere vorteilhafte Merkmale und Ausgestaltungen ergeben sich aus der nachfolgenden Beschreibung eines bevorzugten Ausführungsbeispiels. Es zeigen:
- Fig. 1: eine teilweise aufgeschnittene Perspektivansicht des erfindungsgemäßen Dichtelementes;
- Fig. 2: eine Draufsicht auf eine Dichtung mit zehn Dichtelementen gemäß der Erfindung; und
- Fig. 3: eine Querschnittsansicht gemäß der Linie III-III in Fig. 2.

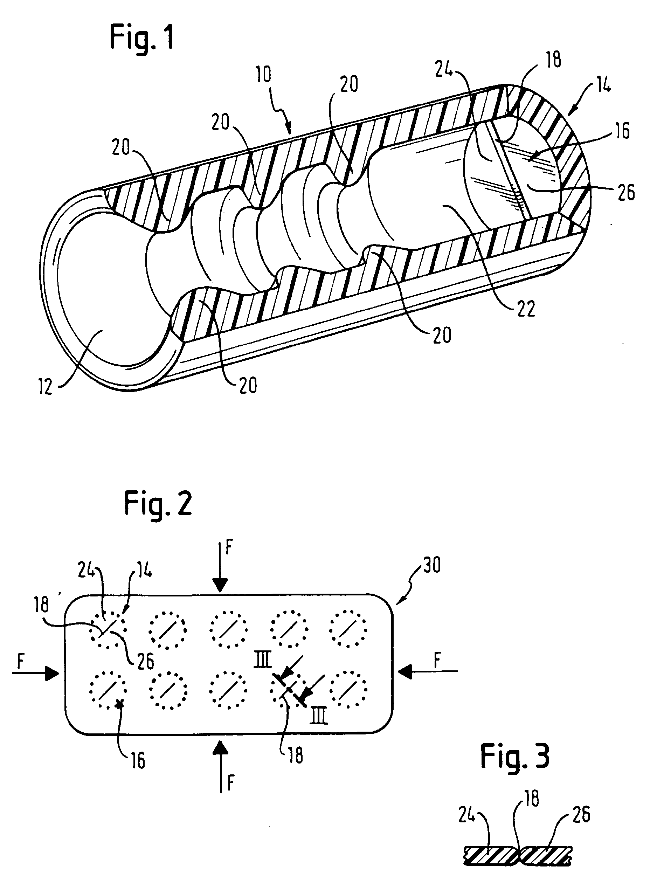

In Fig. 1 ist das erfindungsgemäße Dichtelement 10 in einer teilweise geschnitten Ansicht gezeigt, um auch das Innere des Dichtelementes 10 und die erfindungsgemäße Ausgestaltung besser erkennen zu können.

Das Dichtelement 10 ist bei diesem Ausführungsbeispiel im wesentlichen zylinderförmig ausgebildet, kann jedoch jede beliebige Außenkontur aufweisen. Das Dichtelement ist einstückig aus elastischem Gummimaterial hergestellt und weist an seinen beiden Enden je eine Öffnung 12, 14 auf, die im wesentlichen in der Zylinderachse angeordnet ist, wobei die beiden Öffnungen 12, 14 koaxial zueinander verlaufen. Die Öffnung 12 ist unverschlossen, während die Öffnung 14 mit einem reversibel selbstschließenden Dichtabschnitt 16 versehen ist.

Der Dichtabschnitt 16 ist einstückig mit dem Dichtelement 10 verbunden und als scheibenförmige Kappe ausgebildet, die den Innenraum 22 im Bereich der Öffnung 14 verschließt. Der Dichtabschnitt weist einen radial verlaufenden Schlitz 18 auf, der in Fig. 1 stark vergrößert dargestellt ist. In Wirklichkeit liegen die Abschnitte 24, 26, die den Schlitz 18 begrenzen, dichtend aneinander an.

Im Innenraum 22 des Dichtelementes 10 sind insgesamt drei parallel umlaufende Dichtlippen 20 vorgesehen, die bei eingeführter Leitung für eine Abdichtung sorgen, da in diesem Fall der zusätzliche Dichtabschnitt 16 im Bereich der durch den Schlitz 18 geführten Leitung nicht vollständig abdichtet.

Bei dem in Fig. 1 gezeigten Zustand kann durch die Öffnung 14 keine Feuchtigkeit, Schmutz u. dgl. in das Dichtelement 10 eindringen, da der zusätzliche Dichtabschnitt mit den zu beiden Seiten des Schlitzes 18 aneinanderliegenden Abschnitten 24, 26 die Öffnung 14 dichtend verschließt.

Bei eingeführter Leitung tritt diese durch die Öffnung 12 in den Innenraum 22 ein und wird durch den Schlitz 18 im zusätzlichen Dichtabschnitt 16 gesteckt. Dabei liegen die Ränder des Schlitzes 18 an der Leitung an, so daß auch von dieser Seite nahezu keine Feuchtigkeit, Schmutz u. dgl. in das Dichtelement 10 eindringen können. Eine vollständige Abdichtung wird durch die Dichtlippen 20 erzielt, die an der Leitung dichtend anliegen.

Soll die Leitungsverbindung wieder gelöst werden, wird die Leitung aus dem Innenraum 22 entfernt. Wenn dies geschehen ist, schließen sich die den Schlitz 18 begrenzenden Abschnitte 24, 26 reversibel infolge der Eigenelastizität des aus Gummi hergestellten Dichtelementes 10 wieder dicht und legen sich aneinander an, so daß auch in diesem Zustand ein Eindringen von Feuchtigkeit, Schmutz u. dgl. sicher verhindert ist.

Fig. 1 zeigt zur besseren Darstellung lediglich ein Dichtelement. Es kann jedoch eine beliebige Anzahl an Dichtelementen vorzugsweise einstückig miteinander verbunden werden, um beispielsweise einen Kabelsatz abzudichten.

Fig. 2 zeigt eine Draufsicht auf eine solche Ausführungsform, bei der insgesamt zehn Dichtelemente zu einer Kabelsatzdichtung zusammengefaßt sind. Die in Fig. 2 dargestellte Dichtung 30 besteht aus einem einstückigen, gummielastischen Dichtkörper, dessen einzelne Dichtelemente wie in Fig. 1 dargestellt aufgebaut sind. Der Innenraum 22 jedes Dichtelementes ist in Fig. 2 durch gepunktete Linien angedeutet.

Wie Fig. 2 zeigt, weist jedes Dichtelement der Dichtung 30 einen Schlitz 18 auf, wobei sämtliche Schlitze parallel zueinander verlaufen. Die Dichtung 30 weist einen im wesentlichen quaderförmigen Grundkörper auf, dessen Seitenwände unter 90° zueinander verlaufen. Die Orientierung der Schlitze 18 ist dabei so gewählt, daß diese unter 45° zu den Seitenwänden der Dichtung verlaufen. Mit den Pfeilen F sind die Reaktionskräfte eines Gehäuses (nicht dargestellt) angedeutet, in welches die Dichtung 30 eingesetzt wird und dessen Gehäusewände an den Wänden der Dichtung 30 anliegen.

Fig. 3 zeigt einen Querschnitt durch den zusätzlichen Dichtabschnitt 16. Wie zu erkennen ist, sind die Abschnitte 24, 26 im Bereich des zusätzlichen Dichtabschnitts 16, die unter Bildung des Schlitzes 18 aneinanderanliegen, im Querschnitt abgerundet ausgebildet, d.h. mit einem Radius versehen. Hierdurch wird im Bereich des Schlitzes 18 eine größere Flächenpressung und damit eine bessere Dichtwirkung erzielt.

### Bezugszeichenliste

- 10: Dichtelement
- 12: Öffnung
- 14: Öffnung
- 16: zusätzlicher Dichtabschnitt
- 18: Schlitz
- 20: Dichtlippen
- 22: Innenraum
- 24, 26: Abschnitt
- 30: Dichtung

## Patentansprüche

1. Dichtelement zum Schutz einer Leitungsverbindung gegen Feuchtigkeit, Schmutz u. dgl., das zwei Öffnungen zur Durchführung zumindest einer Leitung aufweist, wobei im Bereich der Leitungsdurchführung zumindest ein erster Dichtabschnitt (20) vorgesehen ist, und wobei mindestens eine der Öffnungen (12, 14) durch einen zusätzlichen Dichtabschnitt (16) verschlossen ist, der reversibel selbstschließend ausgebildet ist.

2. Dichtelement nach Anspruch 1, wobei der zusätzliche Dichtabschnitt (16) zumindest einen Schlitz (18) aufweist.

3. Dichtelement nach Anspruch 2, wobei der zusätzliche Dichtabschnitt (16) scheibenförmig ausgebildet ist und der Schlitz (18) vorzugsweise radial verlaufend ausgebildet ist.

4. Dichtelement nach Anspruch 2 oder 3, wobei der Schlitz (18) von Abschnitten (24, 26) begrenzt ist, die dichtend aneinanderliegen.

5. Dichtelement nach Anspruch 4, wobei die Abschnitte (24, 26) im Bereich der Anlage abgerundet sind.

6. Dichtelement nach einem der Ansprüche 2 bis 5, wobei der sich vor dem zusätzlichen Dichtabschnitt (16) befindliche Innenraum (22) einen im wesentlichen kreisförmigen Querschnitt aufweist und sich der Schlitz (18) im wesentlichen über den gesamten Durchmesser des Innenraumes erstreckt.

7. Dichtelement nach wenigstens einem der vorstehenden Ansprüche, wobei als erster Dichtabschnitt eine umlaufende Dichtlippe (20) vorgesehen ist.

8. Dichtelement nach wenigstens einem der vorstehenden Ansprüche, wobei der zusätzliche Dichtabschnitt (16) an einem Ende des Dichtelementes (10) angeordnet ist.

9. Dichtelement nach wenigstens einem der vorstehenden Ansprüche, wobei dieses aus einem elastischen Gummimaterial, insbesondere aus Silikongummi hergestellt ist.

10. Dichtelement nach wenigstens einem der vorstehenden Ansprüche 2 bis 9, wobei dessen Außenkontur quaderförmig ist und der Schlitz (18) unter etwa 45° zu den Seitenflächen des Quaders verläuft.

11. Dichtung für einen Kabelsatz, bestehend aus mehreren Dichtelementen nach zumindest einem der vorstehenden Ansprüche, die einstückig miteinander verbunden sind.

12. Dichtung nach Anspruch 11, wobei mehrere Schlitze (18) vorgesehen sind, die zueinander parallel verlaufen.
